(19) Europäisches Patentamt
European Patent Office
Office européen des brevets

(11) Veröffentlichungsnummer: **0 332 998 B1**

(12) **EUROPÄISCHE PATENTSCHRIFT**

(45) Veröffentlichungstag der Patentschrift: **04.08.93**

(51) Int. Cl.$^5$: **C08L 69/00**, C08L 67/00

(21) Anmeldenummer: **89103981.0**

(22) Anmeldetag: **07.03.89**

# (54) Mischungen aus aromatischen Polycarbonaten und/oder aromatischen Polyestern mit speziellen Copolymeren.

(30) Priorität: **17.03.88 DE 3808837**

(43) Veröffentlichungstag der Anmeldung:
**20.09.89 Patentblatt 89/38**

(45) Bekanntmachung des Hinweises auf die Patenterteilung:
**04.08.93 Patentblatt 93/31**

(84) Benannte Vertragsstaaten:
**DE FR GB IT**

(56) Entgegenhaltungen:
**US-A- 4 255 534**
**US-A- 4 699 974**

**DATABASE WPIL, Derwent Publications Ltd., London (GB); Nr. 84-053333***

(73) Patentinhaber: **BAYER AG**

**W-5090 Leverkusen 1 Bayerwerk(DE)**

(72) Erfinder: **Leitz, Edgar, Dr.**
**Goethestrasse 63**
**W-4047 Dormagen 1(DE)**
Erfinder: **Eichenauer, Herbert, Dr.**
**Gustav Heinemann-Strasse 3**
**W-4047 Dormagen 1(DE)**
Erfinder: **Ott, Karl-Heinz, Dr.**
**Paul Klee-Strasse 54**
**W-5090 Leverkusen(DE)**

**EP 0 332 998 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der europäischen Patentanmeldung Nr. 87 119 217.5 (Le A 24 910) sind Copolymere mit sequenzartigem Aufbau dar idealisierten Formel (I):

$\{ A - X - B \}_r$ (I)

mit r = 1 bis 20, insbesondere 1 bis 10, worin

-A- = Polymerisat eines cyclischen Carbonates der allgemeinen Formeln (II) und/oder (III) ("Block A")

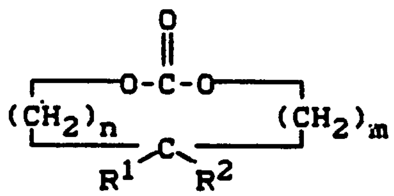

(II)

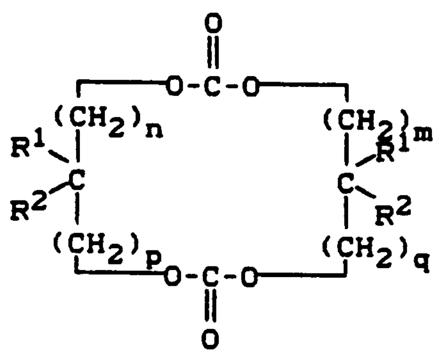

(III)

-B- = Polymerisat eines Lactons der allgemeinen Formel (IV) ("Block B")

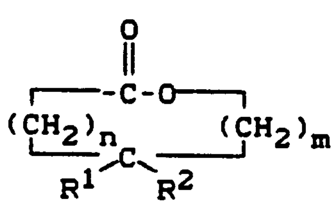

(IV)

X = Mittelstück, enthaltend sowohl das cyclische Carbonat der Formel (II) und/oder (III) als auch das Lacton der Formel (IV) in polymerisierter Form, wobei die Konzentration der Reste von (II) und/oder (III) in Richtung auf -B- und die Konzentration der Reste (IV) in Richtung auf -A- kontinuierlich abnimmt ("tapered structure") wobei in den Formeln (II), (III) und (IV) m, n, p und q unabhängig voneinander 0, 1, 2, 3, 4, 5 oder 6 sind mit den Bedingungen, daß die Summe n+m in (II) mindestens 1, die Summe n+m in (IV) mindestens 1 und die Summen n+p sowie m+q in (III) mindestens 1 betragen, und $R^1$ und $R^2$ = H, $C_{1-6}$-Alkyl, $C_{3-6}$-Alkenyl, $C_{1-6}$-Alk(en)yloxy-$C_{1-6}$-alkyl, insbesondere H, $CH_3$ und $C_2H_5$ bedeuten.

Die mittleren Molekulargewichte der Blöcke A und B sind 500 bis 1.000.000, vorzugsweise 1.000 bis 500.000 und besonders bevorzugt 2.000 bis 250.000; die mittleren Molekulargewichte der Mittelstücke X 300 bis 10.000, vorzugsweise 500 bis 8.000.

Hinzugefügt sei, daß es sich hierbei um Zahlenmittelmolekulargewichte ($\overline{M}n$) handelt, wobei diese sich für die Blöcke A und B aufgrund des Polymerisationsverfahren (Anionische Polymerisation) durch das Monomer/Initiator-Verhältnis einstellen lassen (siehe z.B. H.G. Elias, "Makromoleküle", Hüthig und Wepf

Verlag, Basen, Heidelberg (1975), S. 518 ff).

Gemäß EP-A-86 119 217.5 sind besonders bevorzugte cyclische Carbonate (II) und (III) sind Trimethylglykolcarbonat, Neopentylglykolcarbonat, 1,4-Butandiolcarbonat sowie dimere Carbonate des Pentandiols oder des Hexandiols.

Bevorzugtes Lacton (IV) ist ε-Caprolacton und/oder Pivalolacton.

In den erfindungsgemäßen Polymeren können die mittleren Molekulargewichte der Blöcke A und B sowie der Mittelstücke X verschieden oder nahezu gleich groß sein.

Die Polymerisate enthalten die Blöcke A und B jeweils in Mengen von 5 bis 95 Gew.-% (bezogen auf Gesamtmenge A + B), vorzugsweise aber in Mengen von 5 bis 80 Gew.-% A und 95 bis 20 Gew.-% B (bezogen auf A + B), sowie 5 bis 80 Gew.-% B und 95 bis 20 Gew.-% A (bezogen auf A + B); der Gehalt an Mittelstücken X mit einer "tapered-structure" beträgt 5 bis 50 Gew.-% (bezogen auf A + B + X), vorzugsweise 5 bis 25 Gew.-% (bezogen auf A + B + X).

Ein weiterer Gegenstand dieser europäischen Patentanmeldung Nr. 87 119 217.5 ist ein Verfahren zur Herstellung der Copolymeren.

In diesem Verfahren gibt man eine Lösung eines Gemisches aus cyclischen Carbonaten (II) und/oder (III) und Lacton (IV) in einem aromatischen Lösungsmittel oder einem Ether portionsweise (Anzahl der Portionen = r) zu einer Lösung einer Alkylalkalimetall- bzw. Arylalkalimetall-Verbindung als Initiator, polymerisiert bei +20°C bis -78°C, vorzugsweise zwischen +10°C und -30°C, und isoliert danach das Copolymere.

Bevorzugt kann im Anschluß an die Polymerisation das Reaktionsprodukt neutralisiert werden oder das gebildete anionische Polymere mit einem Alkylhalogenid, Carbonsäurechlorid, Carbonsäureanhydrid oder Carbonsäureester umgesetzt werden.

Geeignete aromatische Lösungsmittel sind Benzol, Toluol; ein geeigneter Ether ist Tetrahydrofuran; zum Erzielen bestimmter Molekulargewichte der Copolymeren kann man auch in Gemischen aus aromatischen Kohlenwasserstoffen und Ethern arbeiten. Geeignete Alkylalkalimetallverbindungen bzw. Arylalkalimetallverbindungen sind z.B. Butyllithium, insbesondere sekundär-Butyllithium, Na-Naphthalin und K-Naphthalin.

Nach der Copolymerisation kann das gebildete Polymer neutralisiert oder mit geeigneten Verbindungen umgesetzt werden, die mit Carbanionen reagieren können unter Ausbildung eines ungeladenen stabilen Endproduktes.

Geeignete Neutralisationsmittel sind z.B. schwache anorganische sowie organische Säuren oder saure Salze von Protonensäuren, N-H- und C-H-aciden Säuren; Verbindungen, die mit Carbanionen reagieren können, sind z.B. Alkylhalogenide (insbesondere Methylchlorid, Methyliodid, Benzylchlorid, Benzylbromid), Carbonsäurechloride (insbesondere Benzoylchlorid, Chlorameisensäureester, Phosgen, Acetylchlorid, Caproylchlorid, Stearoylchlorid), Carbonsäureanhydride (insbesondere Acetanhydrid, Bernsteinsäureanhydrid) und Carbonsäureester (insbesondere aktivierte Ester, wie Carbonsäurephenylester, Carbonsäurenitrophenylester sowie Alkylester von Carbonsäuren), wobei die Alkylgruppen gegebenenfalls durch aktivierende Gruppen wie Nitrogruppen, CN-Gruppen, Carboxylgruppen substituiert sein können.

Üblicherweise werden diese Verbindungen am Ende der Copolymerisation dem Reaktionsprodukt zugefügt, vorzugsweise in gelöster Form, wobei auf gute Durchmischung geachtet werden muß. Vorteilhaft ist es, diese Verbindungen in stöchiometrischem Überschuß einzubringen.

Das Copolymer kann aus dem Reaktionsprodukt isoliert werden, gegebenenfalls unter Abtrennung unerwünschter Verunreinigungen.

Dazu kann man das Copolymere aus der Polymerlösung ausfällen und nachträglich durch Waschen reinigen; bevorzugt ist das Copolymer durch Ausdampfen zu isolieren. Während der Ausdampfung oder vor dieser kann das Copolymer gereinigt werden z.B. durch azeotrope Destillation, Extraktion oder fraktionierte Destillation.

Da das Verfahren mit "lebenden" Anionen arbeitet, sind dementsprechende Bedingungen einzuhalten z.B. Wasserfreiheit. Die Wahl der Reaktions-Bedingungen für das erfindungsgemäße Verfahren, insbesondere von Temperatur und Lösungsmittel, ist wichtig, da bei der Polymerisation der cyclischen Monomeren unerwünschte Abbruchreaktionen stattfinden können, durch die die Eigenschaften der Copolymerisate beeinträchtigt werden können.

Die Copolymere gemäß der europäischen Patentanmeldung Nr. 87 119 217.5 besitzen je nach ihrer Monomerzusammensetzung und der Anzahl der in ihnen enthaltenen Polymerblöcke (d.h. der Anzahl der zur Reaktion gebrachten Monomermischungs-Portionen "r") verschiedene Eigenschaften von kristallin spröde bis amorph kautschukelastisch.

Die Verarbeitung der Copolymeren richtet sich nach ihren Eigenschaften. So können z.B. aus Polymerisaten mit thermoplastischen Eigenschaften mit bekannten Thermoplastverarbeitungsverfahren Formkörper

hergestellt werden.

Überraschenderweise sind die neuen Copolymeren bei der Verarbeitung auch über 150°C noch ausreichend stabil und zeigen keinen molekularen Abbau. Deshalb haben daraus hergestellte Formkörper sehr gute mechanische Eigenschaften, die auch nach mehrmaliger Temperaturbelastung erhalten bleiben.

Die Copolymeren gemäß der europäischen Patentanmeldung Nr. 87 119 217.5 eignen sich vorzugsweise - je nach ihrem chemischen Aufbau - zur Herstellung von Folien, Dichtungen, Beschichtungen, insbesondere dort, wo verbessertes Langzeitverhalten gebraucht wird; sie sind ebenfalls geeignet zur Herstellung von harzartigen, thermoplastischen Verpackungsmaterialien, insbesondere für Lebensmittel.

Die Copolymere lassen sich in bekannter Weise stabilisieren, pigmentieren und mittels üblicher Additive antistatisch ausrüsten, besser verarbeitbar oder flammfest machen oder mit Füllstoffen füllen.

## Beispiele

### Beispiel 1 gemäß europäischer Patentanmeldung Nr. 87 119 217.5

Herstellung eines Copolymeren aus Neopentylglykolcarbonat und ε-Caprolacton (50 Mol-%:50 Mol-%)

$\{ A - X - B \}_1$

(A = Polyneopentylglykolcarbonat-Block,
B = Poly-ε-Caprolacton-Block
X = Mittelstück aus Neopentylglykolcarbonat- und ε-Caprolacton-Einheiten)

Zu einer Lösung von 0,2 ml sek.-Butyllithium (1,4 m Lösung in Cyclohexan) in 10 ml Toluol wurde bei -10°C eine Lösung von 10,2 g Neopentylglykolcarbonat und 8,9 g ε-Caprolacton in 100 ml Toluol gegeben. Nach 160 Minuten war ein Umsatz von 90 % erreicht; die Zersetzung des Reaktionsgemisches erfolgte mit 10 ml Methanol/Salzsäure (Gewichtsverhältnis 9:1). Das Reaktionsprodukt wird durch Fällung mit 250 ml Methanol isoliert.

### Beispiel 2

Herstellung eines Copolymeren aus Neopentylglykolcarbonat und ε-Caprolacton (50 Mol-%:50 Mol-%)

$\{ A - X - B \}_2$

(Zur Bedeutung von A, X und B siehe Beispiel 1).

Zu einer Lösung von 0,2 ml sek.-Butyllithium (1,4 m Lösung in Cyclohexan) in 10 ml Toluol wurde bei -10°C eine Lösung von 5,35 g Neopentylglykolcarbonat und 4,7 g ε-Caprolacton in 50 ml Toluol gegeben und 120 Minuten bei dieser Temperatur gerührt. Danach wurde eine weitere Lösung von 5,35 g Neopentylglykolcarbonat und 4,7 g ε-Caprolacton in 50 ml Toluol zugegeben und wieder 120 Minuten bei -10°C reagieren gelassen. Die Aufarbeitung erfolgte durch Zersetzung des Reaktionsgemisches mit 10 ml Methanol/Salzsäure (Gewichtsverhältnis 9:1) und Fällung mit 250 ml Methanol.

### Beispiel 3

Herstellung eines Copolymeren aus Neopentylglykolcarbonat und ε-Caprolacton (50 Mol-%:50 Mol-%)

$\{ A - X - B \}_3$

(Zur Bedeutung von A, X und B siehe Beispiel 1).

Es wird eine Lösung von 10,6 g Neopentylglykolcarbonat und 9,3 g ε-Caprolacton in 100 ml Toluol hergestellt und auf -10°C abgekühlt. Ein Drittel der Lösung wird ins Reaktionsgefäß zu 0,2 ml sek.-Butyllithium (1,4 m Lösung in Cyclohexan) in 10 ml Toluol gegeben und 70 Minuten bei -10°C gerührt. Danach wird das zweite Drittel der Lösung zugegeben und nach weiteren 120 Minuten das letzte Drittel, welches man nochmals 120 Minuten lang reagieren läßt. Die Aufarbeitung erfolgte durch Zersetzung des Reaktionsgemisches mit 10 ml Methanol/Salzsäure (Gewichtsverhältnis 9:1) und Fällung mit 220 ml Methanol.

Beispiel 4

Herstellung eines Copolymeren aus Neopentylglykolcarbonat und ε-Caprolacton (60 Mol-%:40 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 15,6 g Neopentylglykolcarbonat und 9,1 g ε-Caprolacton in 120 ml Toluol gegeben. Nach 160 Minuten ist ein Umsatz von 86 % erreicht. Nach Zersetzung mit 10 ml Methanol/Salzsäure (Gewichtsverhältnis 9:1) wird das Reaktionsprodukt durch Fällung mit 260 ml Methanol isoliert.

Beispiel 5

Herstellung eines Copolymeren aus Neopentylglykolcarbonat und ε-Caprolacton (30 Mol-%:70 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 7,8 g Neopentylglykolcarbonat und 15,96 g ε-Caprolacton in 95 ml Toluol gegeben. Nach 160 Minuten beträgt der Umsatz >95 %. Die Aufarbeitung erfolgt wie in Beispiel 4 beschrieben.

Beispiel 6

Herstellung eines Copolymeren aus Neopentylglykolcarbonat und ε-Caprolacton (80 Mol-%:20 Mol-%)

$\{ A - X - B \}_1$

Zu einer Lösung von 0,4 ml sek.-Butyllithium (1,4 m Lösung in Cyclohexan) in 10 ml Toluol wurde bei -10 °C eine Lösung von 20,8 g Neopentylglykolcarbonat und 4,56 g ε-Caprolacton in 80 ml Toluol gegeben. Nach 160 Minuten beträgt der Umsatz >95 %. Die Aufarbeitung erfolgt wie in Beispiel 4 beschrieben.

Überraschenderweise wurde nun gefunden, daß man derartige Copolymere, wie sie in der europäischen Patentanmeldung Nr. 87 119 217.5 (Le A 24 910) offenbart sind, mit thermoplastischen, aromatischen Polycarbonaten und/oder mit thermoplastischen, aromatischen Polyestern zu Mischungen mit interessanten Eigenschaften legieren kann.

Gegenstand der vorliegenden Erfindung sind somit Mischungen enthaltend:

1.) 10 bis 98 Gew.-Teile, vorzugsweise 20 bis 95 Gew.-Teile zu thermoplastischen, aromatischen Polycarbonaten und/oder thermoplastischen, aromatischen Polyestern und

2.) 90 bis 2 Gew.-Teile, vorzugsweise 80 bis 5 Gew.-Teile an Copolymeren der Formel (Ia)

$\{ A - X - B \}_r$ (Ia),

worin

r eine ganze Zahl von 1 bis 20, vorzugsweise 1 bis 10 ist, und worin

-A Polymerisate eines cyclischen Carbonats der Formel (V)

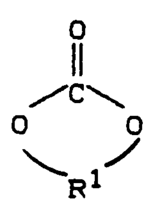

(V)

und/oder der Formel (VI)

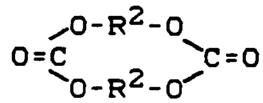

darstellt,

-B- Polymerisate von Lactonen der Formel (VII)

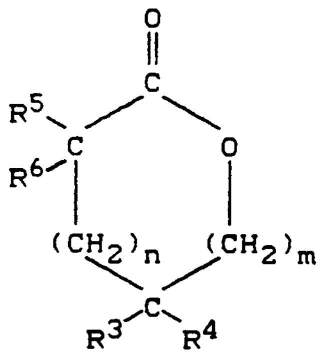

(VII)

darstellt und

-X- Polymerisate darstellt, die sowohl die Carbonate (V) und/oder (VI) als auch die Lactone (VII) in polymerisierter Form enthalten, wobei die Konzentration der polymerisierten Carbonate (V) und/oder (VI) jeweils in Richtung auf die Blöcke -B- und die Konzentration der polymerisierten Lactone (VII) jeweils in Richtung auf die Blöcke -A- kontinuierlich abnimmt ("tapered structure"), und wobei die summe der Gew.-Teile aus den Komponenten 1.) und 2.) jeweils 100 Gew.-Teile beträgt.

$R^1$ in (V) ist ein lineares $C_3$-$C_{10}$-Alkylen, oder ein Rest der Formeln a) bis 1):

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d)

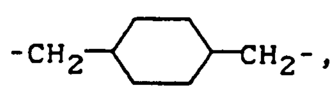

e)

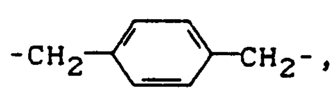

f)

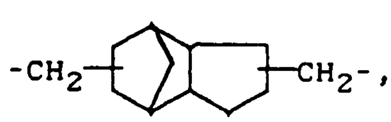

g)

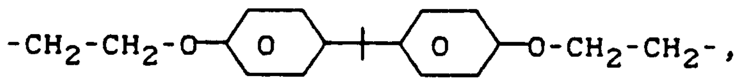

h)

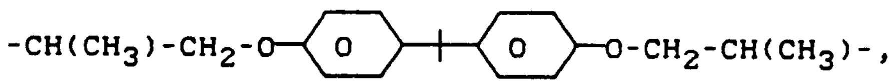

i)

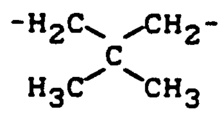
,

j)

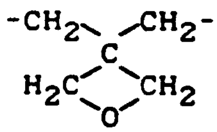
,

k)

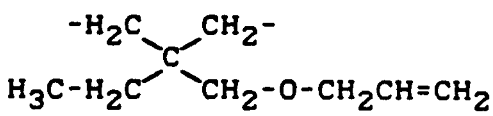
,

l)

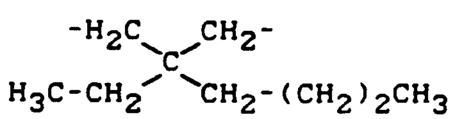
.

$R_2$ in (VI) ist ein lineares $C_4$-$C_{12}$-Alkylen oder ein Rest der Formeln m) oder b)

m) $-CH_2-CH_2-O-CH_2-CH_2-$ oder

b) $-CH_2-CH_2-O-CH_2-CH_2-O-CH_2-CH_2-$.

$R^3$, $R^4$, $R^5$ und $R^6$ in (VII) sind gleich oder verschieden und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl, vorzugsweise H, $CH_3$ und $C_2H_5$; "m" und "n" in (VII) sind unabhängig voneinander 0, 1, 2, 3, 4, 5 oder 6.

Bevorzugt einzusetzende Carbonate (V) und (VI) sind Trimethylenglykolcarbonat, Neopentylglykolcarbonat, 1,4-Butandiolcarbonat, das dimere Carbonat des Pentandiols und der dimere Carbonat des Hexandiols, wobei Neopentylglykolcarbonat besonders bevorzugt ist. Bevorzugte Lactone (VII) sind $\epsilon$-Caprolacton und Pivalolacton.

In den erfindungsgemäß als Komponente 2.) der Mischung einzusetzenden Copolymeren der Formel (Ia) können die mittleren Molekulargewichte der Blöcke -A- und -B- und der Polymerisate -X- gleich oder

verschieden sein. Die mittleren Molekulargewichte ($\overline{M}n$ Zahlenmittel) der Blöcke A und B lassen sich, bedingt durch das Polymerisationsverfahren (Anionische Polymerisation) durch das Monomer/Initiator-Verhältnis einstellen (s. z.B. Hüthig + Wepf Verlag, Basel, Heidelberg (1975), S. 519 ff).

Die mittleren Molekulargewichte (Mn) für -A- liegen zwischen 1.000 und 500.000, vorzugsweise zwischen 2.000 und 250.000, für -B- zwischen 1.000 und 500.000, vorzugsweise zwischen 2.000 und 250.000, für -X-zwischen 300 und 10.000, vorzugsweise zwischen 500 and 8.000.

Die Polymerisate enthalten die Blöcke A und B jeweils in Mengen von 5-95 Gew.-% (bezogen auf Gesamtmenge A + B), vorzugsweise aber in Mengen von 5 bis 80 Gew.-% A und 95 bis 20 Gew.-% B (bezogen auf A + B), sowie 5 bis 80 Gew.-% B und 95 bis 20 Gew.-% A (bezogen auf A + B); der Gehalt an Mittelstücken X mit einer "tapered structure" beträgt 5 bis 50 Gew.-% (bezogen auf A + B + X), vorzugsweise 5 bis 25 Gew.-% (bezogen auf A + B + X).

Die erfindungsgemäß als Komponente 2.) der Mischung einzusetzenden Copolymeren der Formel (Ia) lassen sich gemäß europäischer Patentanmeldung Nr. 87 119 217.5 (Le A 24 910) herstellen, das gilt auch für diejenigen Copolymeren der Formel (Ia), die noch nicht in dieser europäischen Patentanmeldung unter der Formel (I) erfaßt sind.

Die Herstellung der Copolymeren (Ia) erfolgt durch anionische, ringöffnende Lösungspolymerisation der Carbonate (V) und (VI) und der Lactone (VII), wobei für die Synthese der Copolymeren (Ia), in denen r größer 1 ist, also der Copolymere der Struktur

-A-X-B-A-X-B- oder -A-X-B-A-X-B-A-X-B-

eine stufenweise Reaktion unter stufenweiser Zugabe der Reaktanten der Formeln (V), und/oder (VI) und (VII) zu den jeweils bereits gebildeten Copolymeren -A-X-B- bzw. -A-X-B-A-X-B- erforderlich ist.

Im allgemeinen erfolgt die Herstellung der Copolymeren der Formel (Ia) wie folgt:

Eine Lösung eines Gemisches aus cyclischen Carbonaten (V) und/oder VI und Lacton (VII) in einem unprotischen aromatischen oder aliphatischen Lösungsmittel oder Ether wird durch Zugabe eine Lösung einer Alkylalkalimetall- bzw. Arylalkalimetallverbindung oder Alkalialkylalkoholatverbindung als Initiator bei -78 bis +30 °C, vorzugsweise bei -30 °C bis + 20 °C polymerisiert, wobei zuerst der Block A und dann das getaperte Übergangssegment X und dann der Block B aufgebaut wird. Nach vollständigem Umsatz der Monomeren weist das Copolymer die Struktur A-X-B auf und ist weiterhin polymerisationsaktiv.

Wird das Copolymer der Struktur A-X-B gewünscht, so wird das Copolymer neutralisiert unter Verlust der Polymerisationsaktivität und isoliert.

Wird ein Copolymer der Struktur $(A\text{-}X\text{-}B)_2$ gewünscht, so unterbleibt die Neutralisation des Copolymeren.

Durch Zugabe einer weiteren Lösung aus cyclischen Carbonaten (V) und/oder (VI) und Lacton (VII) zu der polymerisationaktiven Lösung des Copolymeren A-X-B erfolgt nun ein neuer Blockaufbau von A (Copolymerstruktur: A-X-B-A), dann Aufbau von X (Copolymerstruktur: A-X-B-A-X) und dann von B. Das Copolymer liegt nun in einer polymerisationsaktiven Form. A-X-B-A-X-B vor.

Wird das Copolymer dieser Struktur gewünscht, so wird das Copolymer neutralisiert und isoliert.

Wird ein Copolymer der Struktur $(A\text{-}X\text{-}B)_3$ gewünscht, so unterbleibt wiederum die Neutralisation des Copolymeren.

Durch Zugabe einer weiteren Lösung aus cyclischen Carbonaten (V) und/oder (VI) und Lacton (VII) zu der polymerisationsaktiven Lösung des Copolymeren A-X-B-A-X-B erfolgt wiederum ein Blockaufbau von A (Copolymerstruktur: A-X-B-A-X-B-A) dann Aufbau von X (Copolymerstruktur: A-X-B-A-X-B-A-X) und dann Aufbau von B. Das Copolymer liegt nun in seiner polymerisationsaktiven Form A-X-B-A-X-B-A-X-B vor.

Das Copolymer kann nun neutralisiert und isoliert werden. Durch Zugabe einer weiteren Lösung aus cyclischen Carbonaten (V) und/oder (VI) und Lacton (VII) läßt sich das Copolymer der Struktur $(A\text{-}X\text{-}B)_4$ herstellen, entsprechendes gilt, wenn r 5, 6 oder eine andere ganze Zahl bis 20 ist.

Erfindungsgemäß geeignete, thermoplastische, aromatische Polycarbonate gemäß Komponente 1) sind solche auf Basis der Diphenole der Formel (VIII)

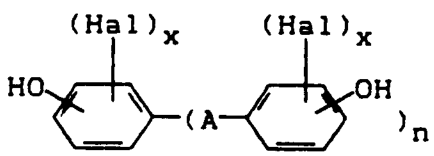

(VIII),

worin

A eine Einfachbindung, $C_1$-$C_5$-Alkylen, $C_2$-$C_5$-Alkyliden, ein $C_5$-$C_6$-Cycloalkyliden, -S-, $-SO_2-$ oder ein

Rest

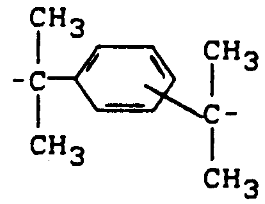

ist,

Hal Chlor oder Brom ist,

x 0, 1 oder 2 und

n 1 oder 0 sind,

und gegebenenfalls zusätzlich der Formel (VIIIa)

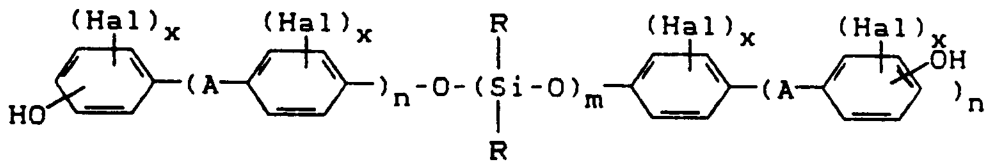

(VIIIa)

worin

A, Hal, x und n die für die Formel (VIII) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl, vorzugsweise $CH_3$, entsprechen und m eine ganze Zahl zwischen 5 und 100, vorzugsweise zwischen 20 und 80 ist.

Die Diphenole der Formel (VIII) sind bekannt oder nach bekannten Verfahren herstellbar; Polydiorganosiloxane mit Hydroxy-aryloxy-Endgruppen gemäß Formel (VIIIa) sind ebenfalls bekannt (vergleiche US-PS 3 419 634) oder nach bekannten Verfahren herstellbar.

Geeigente Diphenole der Formel (VIII) sind

Hydrochinon,

Resorcin,

Dihydroxdiphenyle,

Bis-(hydroxyphenyl)-alkane,

Bis-(hydroxyphenyl)-cycloalkane,

Bis-(hydroxyphenyl)-sulfide,

Bis-(hydroxyphenyl)-sulfone und

α,α'-Bis-(hydroxphenyl)-diisopropylbenzole

sowie deren kernchlorierte und kernbromierte Derivate.

Beispiele für geeignete Diphenole der Formel (VIII) sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (VIII) sind 2,2-Bis-(4-hydroxyphenyl)-propan,2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders geeignete Diphenole der Formel (VIIIa) sind solche, in denen R = Methyl, Ethyl, Propyl, n-Butyl, tert.-Butyl oder Phenyl ist, insbesondere solche der Formel (VIIIb)

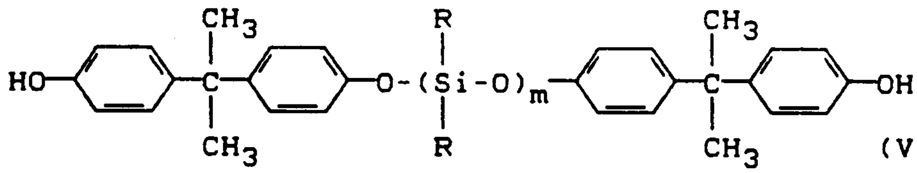

(VIIIb)

worin
die Reste R gleich sind und die vorstehend genannte Bedeutung haben, und m eine ganze Zahl von 5-100, vorzugsweise von 20 bis 80 ist.

Die Diphenole der Formel (VIIIa) können z.B. aus den entsprechenden Bis-chlorverbindungen der Formel (IX)

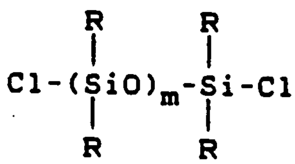

(IX)

und den Diphenolen (VIII) z.B. gemäß US-Patent 3 419 635, Spalte 3, in Kombination mit US-Patent 3 189 662 hergestellt werden.

In den Bis-chlorverbindungen (IX) haben R und m die Bedeutung wie in den Diphenolen (VIIIa) bzw. (VIIIb).

Erfindungsgemäß geeignete Polycarbonate gemäß Komponente 1.) sind Homopolycarbonate aus einem Diphenol und Copolycarbonate aus mehreren Diphenolen, wobei die Diphenole der Formel (VIIIa) nur für die Herstellung von Copolycarbonaten mit den Diphenolen der Formel (VIII) eingesetzt werden, und zwar in einer Gewichtsmenge von 1-50 Gew.-%, vorzugsweise von 1,5-25 Gew.-% und insbesondere von 2 bis 10 Gew.-%, bezogen auf die Gewichtssumme der eingesetzten Diphenole der Formeln (VIII) und (VIIIa).

Erfindungsgemäß geeignete Polycarbonate gemäß Komponente 1.) sind auch Mischungen aus einem Copolycarbonat aus den Diphenolen der Formeln (VIIIa) und (VIII) und einem anderen siloxanfreien thermoplastischen Polycarbonat, wobei der Gehalt an Diphenolen der Formel (VIIIa) in der Polycarbonatmischung, bezogen auf die Gesamtsumme an Diphenolen, wiederum von 1-50 Gew.-% liegt.

Bevorzugte Polycarbonate sind neben dem Bisphenol A-Homopolycarbonat die Copolycarbonate von Bisphenol A mit bis zu 15 Mol-%, bezogen auf die Mol-Summe an Diphenolen, an 2,2-Bis-(3,5-dibrom-4-hydroxyphenyl)-propan und die Copolycarbonate der Diphenole der Formel (VIII) mit 1-50 Gew.-% an Diphenolen der Formel (VIIIa), vorzugsweise der Formel (VIIIb), bezogen jeweils auf die Gewichtssumme der Diphenole (VIII) und (VIIIa) bzw. (VIII) und (VIIIb).

Die erfindungsgemäß geeigneten Polycarbonate gemäß Komponente 1.) können in bekannter Weise verzweigt sein, und zwar vorzugsweise durch den Einbau von 0,05-2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Die Herstellung der erfindungsgemäß geeignete Polycarbonate gemäß Komponente 1.) ist bekannt und kann z.B. mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt werden kann (bezüglich polydiorganosiloxanhaltiger Polycarbonate siehe DE-OS 3 334 872 (Le A 22 594).

Die erfindungsgemäß geeigneten Polycarbonate gemäß Komponente 1.) haben mittlere Gewichtsmittelmolekulargewichte ($M_w$, gemessen durch Ultrazentrifugation oder Streulichtmessung) von 10.000-200.000, vorzugsweise von 20.000-80.000.

Geeignete Kettenabbrecher zur Einstellung der Molekulargewichte der Polycarbonate gemäß Komponente 1.) sind z.B. Phenol, p-Chlorphenol, p-tert.-Butylphenol, 2,4,6-Tribromphenol, langkettige Alkylphenole, wie 4-81,3-(Tetramethylbutyl)-phenol (DE-OS 2 842 005), Monoalkylphenole und Dialkylphenole mit insgesamt 8-20 C-Atomen in den Alkylsubstituenten, wie 3,5-di-tert.-Butylphenol, p-Isooctylphenol, p-tert.-Octylphenol, p-Dodecylphenol und 2-)3,5-Dimethyl-heptyl)-phenol und 4-(3,5-Dimethylheptyl)-phenol (DE-OS 3 506 472).

Die Menge an Kettenabbrecher beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Erfindungsgemäß geeignete, thermoplastische, aromatische Polyester gemäß Komponente 1.) sind thermplastische aromatische Polyester(carbonate) auf Basis von $C_6$-$C_{30}$-Diphenolen, aromatischen $C_8$-$C_{14}$-Dicarbonsäuren, Kettenabbrechern und gegebenenfalls Kohlensäurehalogeniden und/oder Verzweigern.

Polyester(carbonate) im Sinne vorliegender Erfindung sind somit aromatische, gegebenenfalls verzweigte Polyester, die außerdem noch Carbonat-Bindeglieder enthalten können, wobei die Carbonat-Bindeglieder in der Polykondensatkette maximal 99 Mol-%, vorzugsweise 80 Mol-% und insbesondere 50 Mol-%, bezogen auf die Mol-Summe der Ester- und Carbonat-Bindeglieder in der Polykondensatkette betragen, und wobei somit die Ester-Bindeglieder mindestens 1 Mol-%, vorzugsweise 20 Mol-% und insbesondere 50 Mol-%, bezogen auf die Mol-Summe der Ester- und Carbonat-Bindeglieder in der Polykondensatkette betragen.

Geeignete $C_6$-$C_{30}$-Diphenole sind die für die Polyarbonate genannten der Formel (VIII).

Bevorzugte $C_6$-$C_{30}$-Diphenole sind ebenfalls die bevorzugten der Formel (VIII).

Geeignete aromatische Dicarbonsäuren sind beispielsweise Isophthalsäure, Terephthalsäure, Diphenylether-4,4'-dicarbonsäure und Naphthalin-2,6-dicarbonsäure.

Bevorzugte aromatische Dicarbonsäuren sind Isophthalsäure, Terephthalsäure und deren Gemische im Verhältnis zwischen 1:20 und 20:1.

Die Dicarbonsäuren werden in Form der Dicarbonsäuredichloride in die Polyester bzw. in die Polyestercarbonate eingebaut.

Geeignete Kettenabbrecher sind die bereits für die Polycarbonatherstellung genannten phenolischen. Darüberhinaus sind Chlorkohlensäureester dieser phenolischen Kettenabbrecher geeignet. Geeignete Kettenabbrecher sind außerdem Säurechaloride von aromatischen Monocarbonsäure, beispielsweise Benzoylchlorid. Geeignete Kettenabbrecher sind außerdem Säurechloride von aliphatischen $C_2$-$C_{22}$-Acetylchlorid.

Die Menge an einzusetzenden Kettenabbrecher beträgt zwischen 0,1 und 10 Mol-%, wobei im Falle von phenolischen Kettenabbrechern die Menge auf Mole Diphenole bezogen wird und im Falle von Säurechlorid-Kettenababrechern die Menge auf Mole Dicarbonsäuredichloride bezogen wird.

Bevorzugtes Kohlensäurehalogenid ist $COCl_2$.

Mögliche Verzweigungsmittel sind in den DE-OS 2 940 024 und 3 007 934 genannt.

Die Herstellung sowohl der erfindungsgemäß geeigneten Polyester als auch der erfindungsgemäß geeignete Polyestercarbonate ist bekannt.

(Siehe dazu beispielsweise wiederum DE-OS 2 940 024 (Le A 19 932) und DE-OS 3 007 934 (Le A 21203) sowie die deutschen Offenlegungsschriften 2 232 877, 2 703 376, 3 000 610 und 2 714 544 und die DE-AS 1 495 626). Besonders bevorzugt ist das Phasengrenzflächenverfahren.

Am Aufbau der erfindungsgemäß geeigneten Polyester(carbonate) gemäß Komponente 1.) können auch bis jeweils 30 Mol-% der Dicarbonsäuren und Dihydroxyverbindungen aliphatische Baugruppen, z.B. Adipinsäure, Butandiol-1,4-beteiligt sein.

Die erfindungsgemäß geeigneten Polyester(carbonate) gemäß Komponente 1.) können auch aromatische Hydroxycarbonsäure, also beispielsweise p-Hydroxybenzoesäure, eingebaut enthalten, wobei dies unter Anrechnung auf die Diphenol- und der Dicarbonsäure-Bausteine in bekannter Weise erfolgt. 1 Mol aromatischer Hydroxycarbonsäure substituiert somit jeweils 1/2 Mol an Dicarbonsäure und 1/2 Mol an Diphenol.

In den Polyestercarbonaten gemäß Komponente 1.) können die Estergruppen und die Carbonatgruppen statistisch verteilt oder auch in Blöcken angeordnet sein.

Die erfindungsgemäß geeigneten thermoplastischen aromatischen Polyester gemäß Komponente 1.) haben relative Lösungsviskositäten ($\pi_{rel}$) im Bereich von 1,18 bis 1,4, vorzugsweise 1,22 bis 1,3 (gemessen an Lösungen von 0,5 g Polyester in 100 ml $CH_2Cl_2$-Lösung bei 25 °C).

Die erfindungsgemäßen Abmischungen aus den Komponenten 1.) und 2.) haben ausgezeichnete Zähigkeiten verbunden mit hoher Beständigkeit gegen die Einwirkung organischer Lösungsmittel und verbunden mit gutem Fließverhalten.

Die erfindungsgemäßen Mischungen können weitere Zusätze wie Stabilisatoren, Pigmente, Entformungsmittel, Flammschutzmittel und/oder Antistatika enthalten.

Die erfindungsgemäßen Mischungen, enthaltend die Komponenten 1.), 2.) und gegebenefnalls weitere Zusätze, können hergestellt werden, indem man ihre Bestandteile in bekannter Weise vermischt und bei Temperaturen von 200-330 °C in üblichen Mischvorrichtungen, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von Mischungen enthaltend die Komponenten 1.), 2.) und gegebenenfalls Stabilisatoren, Pigmente, Entformungsmittel, Flammschutzmittel und/oder Antistatika, das dadurch gekennzeichnet ist, daß man die Komponenten 1.) und 2.) und gegebenenfalls Stabilisatoren, Pigmente, Entformungsmittel, Flammschutzmittel und/oder Antistatika in bekannter Weise vermischt und danach bei Temperaturen von 200 °C bis 330 °C in üblichen Mischvorrichtungen schmelzcompoundiert oder schmelzextrudiert.

Die Bestandteile können in bekannter Weise sowohl sukzessive als auch simultan vermischt werden bei etwa 20 °C (Raumtemperatur) und auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile für Haushaltsgeräte, Formteile für den Kfz-Innenraum und insbesondere für den Kfz-Außenbereich.

Eine weitere Form der Verarbeitung ist die Herstellung von Formkörpern durch Tiefziehen aus vorher hergestellten Platten oder Folien.

Beispiele:

Eingesetzte Polykondensate und Polymerisate

1.1. Polycarbonat auf Basis Bisphenol A mit einer relativen Lösungsviskosität $\eta_{rel}$ von 1,26 bis 1,28, gemessen in $CH_2Cl_2$ bei 25 °C und einer Konzentration von 0,5 g/100 ml.

1.2. Copolycarbonat auf Basis von Bisphenol A und 5 Gew.-% Polydimethylsiloxan der Blöcklänge ($P_n$) = 40, mit einer relativen Lösungsviskosität von 1,3, gemessen in $CH_2Cl_2$ bei 25 °C und einer Konzentration von 0,5 g/100 ml.

1.3. Polyestercarbonat mit einem Estergehalt von 80 Mol-% auf Basis von Bisphenol A, Iso- und Terephthalsäure (1:1) mit einer relativen Lösungsviskosität von 1,3, gemessen in $CH_2Cl_2$ bis 0,5 g/100 ml.

2.1. Blockcopolymerisat vom Typ A-X-B, wobei A Polyneopentylglykolcarbonat und B Poly-$\epsilon$-Caprolacton darstellen. X bezeichnet ein "getapertes" Übergangssegment aus Neopentylglykolcarbonat und $\epsilon$-Caprolacton. Das Blockcopolymerisat wurde durch ringöffnende anionische Copolymerisation von Neopentylglykolcarbonat und $\epsilon$-Caprolacton erhalten. Das Gewichtsverhältnis der Monomeren Neopentylglykolcarbonat und $\epsilon$-Caprolacton im Blockcopolymerisat beträgt 78:22 (ermittelt durch $^1$H-NMR-Spektroskopie). Die relative Lösungsviskosität $\eta_{rel}$ des Blockcopolymerisats beträgt 3,27 (2 Gew.-%-ige Lösung in $CH_2Cl_2$ bei 20 °C).

2.2. wie 2.1.
Gewichtsverhältnis Neopentylglykolcarbonat: $\epsilon$-Caprolacton = 61:39; $\eta_{rel}$ = 4,02.

2.3. wie 2.1.
Gewichtsverhältnis Neopentylglykolcarbonat: $\epsilon$-Caprolacton = 85:15; $\eta_{rel}$ = 2,53.

3. Phosphorigsäureester des Bis(2-hydroxy-3-cyclohexyl-5-methyl-phenyl)methans als Stabilisator.

Die Komponenten wurden in einem 1,3 l-Innenkneter compoundiert.

Die Formkörper wurden mit einer Spritzgußmaschine bei 260 °C bzw. 280 °C hergestellt.

Die Kerbschlagzähigkeit $a_k$ nach Izod wurde an Stäben der Abmessung 80x10x4 mm gemäß ISO 180 1 A bei den in den Beispielen angegebenen Temperaturen bestimmt.

Die Fließfähigkeit wurde beurteilt über den bei der verwendeten Spritzgußmaschine (Massetemperatur: 260 °C, 280 °C) notwendigen Fülldruck (siehe Johannaber, Kunststoffe 74 (1984, 1; S. 1-5) zur Herstellung von Stäben der Abmessung 80x10x4 mm.

Das Spannungsrißverhalten wurde an Stäben der Abmessung 80x10x4 mm, Massetemperatur 260 °C, untersucht. Als Kraftstoffsimulanz wurde eine Mischung aus 50 % Toluol und 50 % Isooctan verwendet. Die Probekörper wurden mittels einer Kreisbogenschablone vorgedehnt und 5 min. bei Zimmertemperatur im Kraftstoffsimultant gelagert. Die Vordehnung $\epsilon_x$ betrug 0,2-2,4 %. Das Spannungsrißverhalten wurde über die Rißbildung bzw. den Bruch in Abhängigkeit der Vordehnung beurteilt.

Die Zusammensetzung der geprüften Materialien sowie die erhaltenen Daten sind in den folgenden Tabelle zusammengefaßt:

Tabelle 1

| Komponenten | erfindungsgemäße Beispiele (Gew.-Teile) 1 | 2 | 3 | Vergleichsbeispiel (Gew.-Teile) 4 |
|---|---|---|---|---|
| 1.1. | 95 | 90 | 80 | 100 |
| 2.1. | 5 | 10 | 20 | - |
| **Prüfungen** | | | | |
| Kerbschlagzähigkeit $a_k$ | | | | |
| $a_k$ (RT) (KJ/m²) (260° C) | 18 | 48 | 58 | 9 |
| Fülldruck (bar) bei 260° C | 112 | 80 | - | 138 |
| Spannungsriß-verhalten | | | | |
| KR/OR* bei Vordehnung $\epsilon_x$ (%) | - | 0,7 | 0,6 | - |
| Bruch bei Vordehnung $\epsilon_x$ (%) | 0,4 | 1,2 | - | 0,4 |
| kein Bruch bei Vordehnung $\epsilon_x$ (%) | - | - | 2,4 | - |

* KR/OR: Kanten/Oberrisse

## Tabelle 2

| Komponenten | erfindungsgemäße Beispiele (Gew.-Teile) 5 | 6 | Vergleichsbeispiel (Gew.-Teile) 7 |
|---|---|---|---|
| 1.2. | 93 | 93 | 100 |
| 2.1. | 7 | - | - |
| 2.2. | - | 7 | - |
| Prüfungen | 5 | 6 | 7 |
| Kerbschlagzähigkeit $a_k$ | | | |
| $a_k$ (RT) (kJ/m²) (260°) | 65 | 57 | 65 |
| Fülldruck (bar) bei 260° C | 97 | 119 | 154 |
| KR/OR* bei Vordehnung $\varepsilon_x$ (%) | 0,7 | 0,7 | - |
| Bruch bei Vordehnung $\varepsilon_x$ (%) | - | 1,0 | 0,4 |
| kein Bruch bei Vordehnung $\varepsilon_x$ (%) | 2,4 | - | - |

* KR/OR: Kanten/Oberrisse

Tabelle 3

| Komponenten | erfindungsgemäße Beispiele 8 | 9 | Vergleichsbeispiel 10 |
|---|---|---|---|
| 1.1. | 55 | 50 | 60 |
| 1.3. | 35 | 30 | 40 |
| 2.3. | 10 | 20 | - |
| 3. | 0,25 | 0,25 | 0,25 |
| Prüfungen | 8 | 9 | 10 |
| Kerbschlagzähigkeit $a_k$ | | | |
| $a_k$ (RT) (kJ/m²) (280°) | 8x49<br>2x27 | 90 | 7x37<br>3x23 |
| $a_k$ (+10° C) (kJ/m²) (280° C) | 2x34<br>8x25 | 71 | 17 |
| Fülldruck (bar) bei 280° C | 55 | - | 134 |
| Spannungsrißverhalten | | | |
| KR/OR* bei Vordehnung $\epsilon_x$ (%) | 0,6 | 1,0 | 0,2 |
| Bruch bei Vordehnung $\epsilon_x$ (%) | 1,0 | 2,4 | 0,4 |

* KR/OR: Kanten/Oberrisse

## Patentansprüche

1. Mischungen enthaltend

1.) 10 bis 98 Gew.-Teile an thermoplastischen aromatischen Polycarbonaten und/oder thermoplastischen aromatischen Polyestern und

2.) 90 bis 2 Gew.-Teile an Copolymeren der Formel (Ia)

$$\left[ A - X - B \right]_r \quad \text{(Ia)}$$

worin r eine ganze Zahl von 1 bis 20 ist, und worin

-A- Polymerisate cyclischer Carbonate der Formel (V),

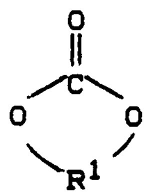

(V)

und/oder der Formel (VI)

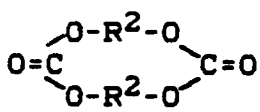

darstellt,

-B- Polymerisate von Lactonen der Formel (VII)

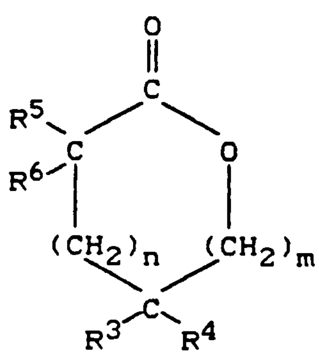

(VII)

darstellt und

-X- Polymerisate darstellt, die sowohl die Carbonate (V) und/oder (VI) als auch die Lactone (VII) in polymerisierter Form enthalten, wobei die Konzentration der polymerisierten Carbonate (V) und/oder (VI) jeweils in Richtung auf die Blöcke -B-und die Konzentration der polymerisierten Lactone (VII) jeweils in Richtung auf die Blöcke -A- kontinuierlich abnimmt ("tapered structure"), und wobei die summe der Gew.-Teile aus den Komponenten 1.) und 2.) jeweils 100 Gew.-Teile beträgt, und wobei

$R^1$ in (V) ist ein lineares $C_3$-$C_{10}$-Alkylen, oder ein Rest der Formeln a) bis 1)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d)

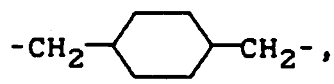

e)

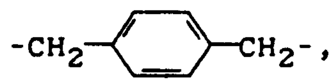

f)

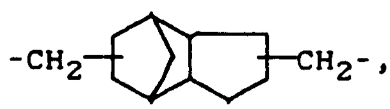

g)

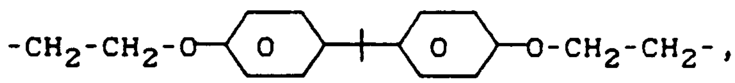

h)

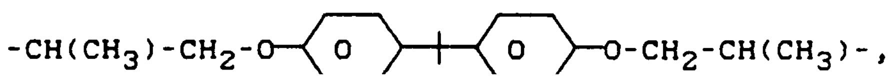

i)

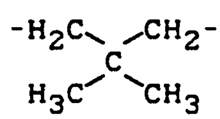

,

j)

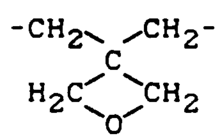

,

k)

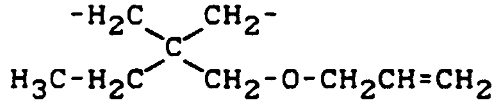

oder

l)

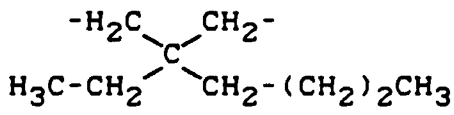

ist,

$R^2$ in (VI) ist ein lineares $C_4$-$C_{12}$-Alkylen oder ein Rest der Formeln m) oder b)

m) $-CH_2-CH_2-O-CH_2-CH_2-$ oder

b) $-CH_2-CH_2-O-CH_2-CH_2-O-CH_2-CH_2-$ ist

und wobei

$R^3$, $R^4$, $R^5$ und $R^6$ in (VII) sind gleich oder verschieden sind und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl sind und

wobei

"m" und "n" in (VII) sind unabhängig voneinander 0, 1, 2, 3, 4, 5 oder 6 sind.

**2.** Mischungen gemäß Anspruch 1, dadurch gekennzeichnet, daß sie 20 bis 95 Gew.-Teile an Komponente 1.) und 80 bis 5 Gew.-Teile zu Komponenten 2.) enthalten.

**3.** Mischungen gemäß Ansprüche 1 und 2, dadurch gekennzeichnet, daß im Copolymeren der Formel (Ia) r eine ganze Zahl von 1 bis 10 ist.

**4.** Mischungen gemäß Ansprüche 1 und 2, dadurch gekennzeichnet, daß die Komponente 1.) ein thermoplastisches Polycarbonat auf Basis der Diphenole der Formel (VIII)

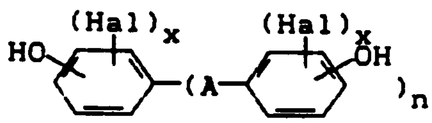

(VIII)

worin

A eine Einfachbindung, $C_1$-$C_5$-Alkylen, $C_2$-$C_5$-Alkyliden, ein $C_5$-$C_6$-Cycloalkyliden, -S-, $-SO_2-$ oder ein Rest

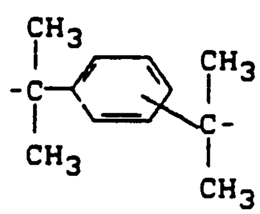

ist,

Hal Chlor oder Brom ist,

x 0, 1 oder 2 und

n 1 sind,

und gegebenenfalls zusätzlich der Formel (VIIIa)

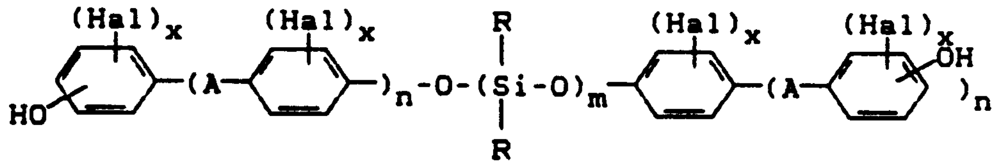

(VIIIa)

worin
A, Hal, x und n die für die Formel (VIII) genannte Bedeutung haben, die Reste R gleich oder verschieden sind und lineares $C_1$-$C_{10}$-Alkyl, verzweigtes $C_3$-$C_{20}$-Alkyl, $C_6$-$C_{20}$-Aryl, entsprechen und m eine ganze Zahl zwischen 5 und 100, ist.

**5.** Mischungen gemäß Ansprüche 1 und 2, dadurch gekennzeichnet, daß die Komponente 1) ein thermoplastischer aromatischer Polyester auf Basis von $C_6$-$C_{30}$-Diphenolen, aromatischen $C_8$-$C_{14}$-Dicarbonsäuren, Kettenabbrechern und gegebenenfalls Kohlensäurehalogeniden und/oder Verzweigern ist.

**6.** Mischungen gemäß Anspruch 5, dadurch gekennzeichnet, daß die Komponente 1) ein thermoplastischer, aromatischer Polyestercarbonat ist.

**7.** Mischungen gemäß Ansprüche 1 und 2, dadurch gekennzeichnet, daß sie zusätzlich Stabilistoren, Pigmente, Entformungsmittel, Flammschutzmittel und/oder Antistatika enthalten.

**8.** Verfahren zur Herstellung der Mischungen der Ansprüche 1 bis 7, dadurch gekennzeichnet, daß man die Komponenten 1) und 2) und gegebenenfalls Stabilisatoren, Pigmente, Entformungsmittel, Flammschutzmittel und/oder Antistatika in bekannter Weise vermischt und danach bei Temperturen von 200 °C bis 330 °C in üblichen Mischvorrichtungen schmelzcompoundiert und schmelzextrudiert.

**Claims**

**1.** Mixtures containing
1.) 10 to 98 parts by weight of thermoplastic aromatic polycarbonates and/or thermoplastic aromatic polyesters and
2.) 90 to 2 parts by weight of copolymers corresponding to formula (Ia)

$$\{ A - X - B \}_r \qquad \text{(Ia)}$$

in which r is an integer of 1 to 20,
-A- represents polymers of cyclic carbonates corresponding to formula (V)

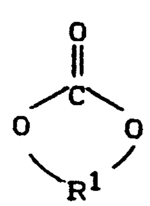

(V)

and/or to formula (VI)

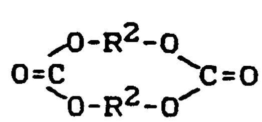

-B- represents polymers of lactones corresponding to formula (VII)

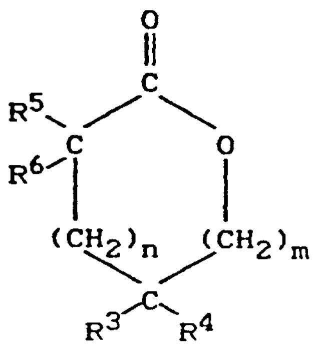

(VII)

and

-X- represents polymers containing both the carbonates (V) and/or (VI) and the lactones (VII) in polymerized form, the concentration of the polymerized carbonates (V) and/or (VI) decreasing continuously towards the blocks -B- and the concentration of the polymerized lactones (VII) decreasing continuously towards the blocks -A- ("tapered structure") and the sum of the parts by weight of components 1.) and 2.) amounting to 100 parts by weight;

$R^1$ in (V) is a linear $C_3$-$C_{10}$ alkylene radical or a radical corresponding to formulae a) to l)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d)

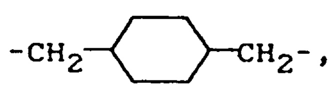

e)

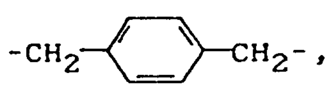

f)

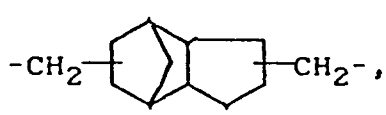

g)

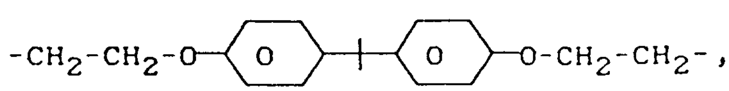

h)

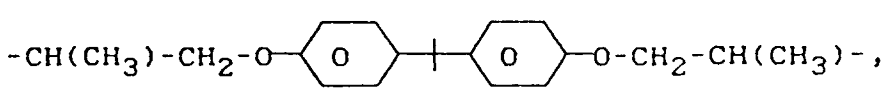

i)

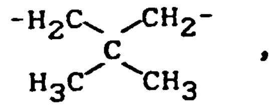

j)

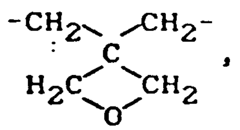

k)

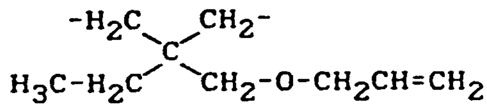

or

l)

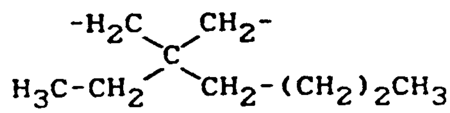

$R^2$ in (VI) is a linear $C_4$-$C_{12}$ alkylene or a radical corresponding to formulae m) or b)
m) $-CH_2-CH_2-O-CH_2-CH_2-$ or
b) $-CH_2-CH_2-O-CH_2-CH_2-O-CH_2-CH_2-$
and
$R^3$, $R^4$, $R^5$ and $R^6$ in (VII) may be the same or different and represent H, $C_1$-$C_6$ alkyl, $C_3$-$C_6$ alkylene, $C_1$-$C_6$ alkoxy and $C_2$-$C_6$-alkyleneoxy-$C_1$-$C_6$-alkyl and
"m" and "n" in (VII) independently of one another are 0, 1, 2,3,4,5 or 6.

**2.** Mixtures as claimed in claim 1, characterized in that they contain from 20 to 95 parts by weight of component 1.) and 80 to 5 parts by weight of component 2.).

**3.** Mixtures as claimed in claims 1 and 2, characterized in that, in the copolymer of formula (Ia), r is an integer of from 1 to 10.

**4.** Mixtures as claimed in claims 1 and 2, characterized in that component 1.) is a thermoplastic polycarbonate based on diphenols corresponding to formula (VIII)

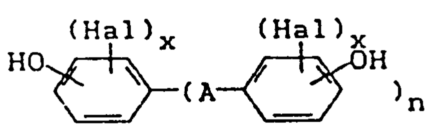

(VIII)

in which
A is a single bond, $C_1$-$C_5$ alkylene, $C_2$-$C_5$ alkylidene, a $C_5$-$C_6$ cycloalkylidene, -S-, $-SO_2-$ or a radical of the formula

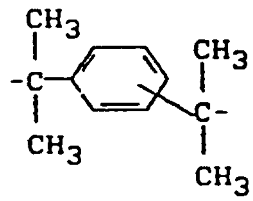

Hal is chlorine or bromine,
x = 0, 1 or 2 and
n = 1
and, optionally, to formula (VIIIa)

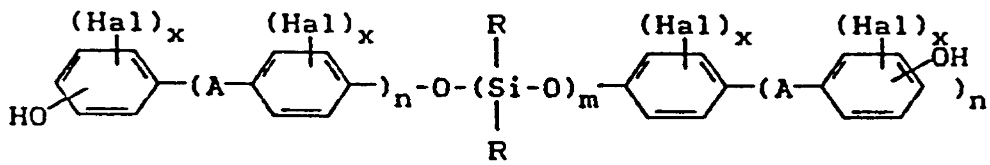

(VIIIa)

in which
A, Hal, x and n are as defined for formula (VIII), the substituents R may be the same or different and represent linear $C_1$-$C_{10}$ alkyl, branched $C_3$-$C_{20}$ alkyl, $C_6$-$C_{20}$ aryl and m is an integer of from 5 to 100.

**5.** Mixtures as claimed in claims 1 and 2, characterized in that component 1.) is a thermoplastic aromatic polyester based on $C_6$-$C_{30}$ diphenols, aromatic $C_8$-$C_{14}$ dicarboxylic acids, chain terminators and, optionally, carbonic acid halides and/or branching agents.

**6.** Mixtures as claimed in claim 5, characterized in that component 1.) is a thermoplastic aromatic polyester carbonate.

**7.** Mixtures as claimed in claims 1 and 2, characterized in that they additionally contain stabilizers, pigments, mold release agents, flameproofing agents and/or anti static agents.

**8.** A process for the production of the mixtures claimed in claims 1 to 7, characterized in that components 1.) and 2.) and, optionally, stabilizers, pigments, mold release agents, flameproofing agents and/or antistatic agents are mixed in known manner and the resulting mixtures are then melt-compounded or melt-extruded in standard mixing units at temperatures of 200 to 330 °C.

**Revendications**

**1.** Mélanges contenant
1) 10 à 98 parties en poids de polycarbonates aromatiques thermoplastiques et/ou de polyesters aromatiques thermoplastiques et
2) 90 à 2 parties en poids de copolymères de formule (Ia)

$[ A - X - B ]_r$ (Ia)

dans laquelle
r est un nombre entier de 1 à 20 et dans laquelle
-A- représente des polymères de carbonates cycliques de formule (V)

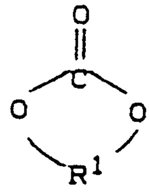

(V)

et/ou de formule (VI)

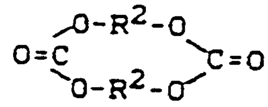

-B- représente des polymères de lactones de formule (VII)

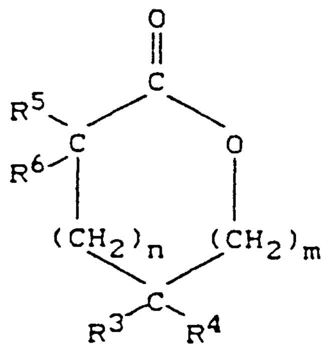

(VII)

et

-X- représente des polymères qui contiennent aussi bien les carbonates (V) et/ou (VI) et également les lactones (VII) sous forme polymérisée, la concentration des carbonates (V) et/ou (VI) polymérisés diminuant en continu chaque fois dans la direction des séquences B et la concentration des lactones (VII) polymérisées diminuant en continu chaque fois dans la direction des séquences -A- ("tapered structure") et la somme des parties en poids des composants 1 et 2 étant chaque fois de 100 parties en poids et

$R^1$ dans (V) est un groupe alkylène linéaire en $C_3$-$C_{10}$ ou un des restes de formules a) à l)

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d)

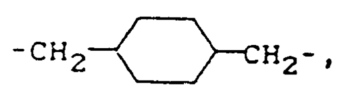

e)

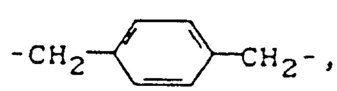

f)

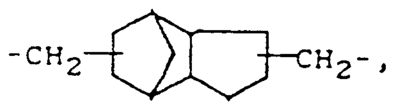

g)

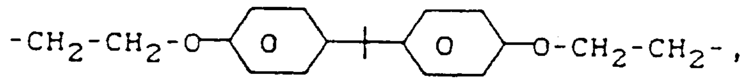

h)

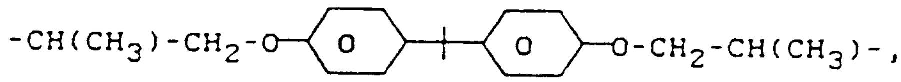

i)

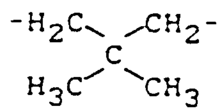
,

j)

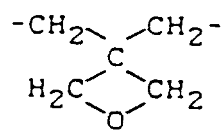
,

k)

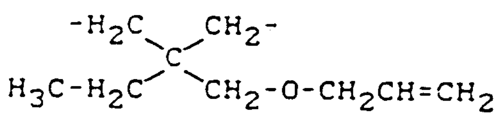

ou

l)

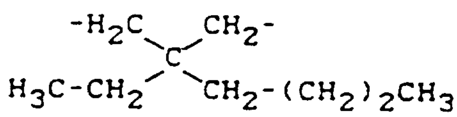

$R^2$ dans (VI) est un groupe alkylène linéaire en $C_4$-$C_{12}$ ou un reste de formule m) ou b)

m) $-CH_2-CH_2-O-CH_2-CH_2-$ ou

b) $-CH_2-CH_2-O-CH_2-CH_2-O-CH_2-CH_2-$

et

$R^3$, $R^4$, $R^5$ et $R^6$ dans (VII) sont identiques ou différents et sont H, alkyle en $C_1$-$C_6$, alkylène en $C_3$-$C_6$,

alcoxy en $C_1$-$C_6$ et (alkylène en $C_2$-$C_6$)-oxy-alkyle en $C_1$-$C_6$
où
"m" et "n" dans (VII) sont indépendamment l'un de l'autre 0, 1, 2, 3, 4, 5 ou 6.

**2.** Mélanges selon la revendication 1, caractérisés en ce qu'ils contiennent 20 à 95 parties en poids de composant 1) et 80 à 5 parties en poids en composants 2).

**3.** Mélanges selon les revendications 1 et 2, caractérisés en ce que r dans le copolymère de formule (Ia) est un entier de 1 à 10.

**4.** Mélanges selon les revendications 1 et 2, caractérisés en ce que le composant 1) est un polycarbonate thermoplastique à base de diphénols de formule (VIII)

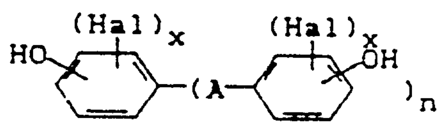

(VIII)

dans laquelle
A est une liaison simple, un groupe alkylène en $C_1$-$C_5$, un groupe alkylidène en $C_2$-$C_5$, un groupe cycloalkylidène en $C_5$ ou $C_6$, -S-, $-SO_2-$ ou un reste

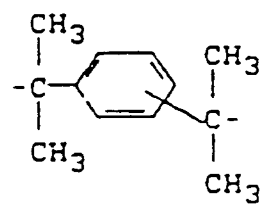

Hal est le chlore ou le brome,
x est égal à 0, 1 ou 2 et
n est égal à 1,
et éventuellement en outre de formule (VIIIa)

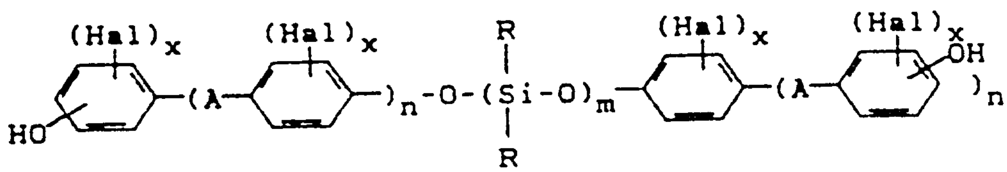

(VIIIa)

dans laquelle
A, Hal, x et n ont la signification indiquée pour la formule (VIII), les restes R sont identiques ou différents et représentent chacun un groupe alkyle linéaire en $C_1$-$C_{10}$, un groupe alkyle ramifié en $C_3$-$C_{20}$ ou un groupe aryle en $C_6$-$C_{20}$ et m est un nombre entier entre 5 et 100.

**5.** Mélanges selon les revendications 1 et 2, caractérisés en ce que le composant 1) est un polyester aromatique thermoplastique à base de diphénols en $C_6$-$C_{30}$, d'acides dicarboxyliques aromatiques en $C_8$-$C_{14}$, d'agents de coupure de chaînes et éventuellement d'halogénures d'acide carbonique et/ou d'agents de ramification.

**6.** Mélanges selon la revendication 5, caractérisés en ce que le composant 1) est un polyestercarbonate aromatique thermoplastique.

**7.** Mélanges selon les revendications 1 et 2, caractérisés en ce qu'ils contiennent en outre des stabilisants, des pigments, des agents de démoulage, des agents ignifugeants et/ou des agents antistatiques.

**8.** Procédé pour la fabrication des mélanges selon les revendications 1 à 7, caractérisé en ce que l'on mélange de manière connue les composants 1) et 2) et éventuellement des stabilisants, des pigments, des agents de démoulage, des agents ignifugeants et/ou des agents antistatiques et ensuite on les combine à l'état fondu dans des mélangeurs habituels et on les extrude à l'état fondu à des températures de 200 à 330 ° C.